Europäisches Patentamt

European Patent Office

Office européen des brevets

(11) Publication number: **0 328 687**
**A1**

# EUROPEAN PATENT APPLICATION
## published in accordance with Art. 158(3) EPC

(21) Application number: 88907374.8

(22) Date of filing: 22.08.88

(86) International application number:
PCT/JP88/00834

(87) International publication number:
WO 89/01849 (09.03.89 89/06)

(51) Int. Cl.4: **B25J 9/04 , G05B 19/18**

(30) Priority: 22.08.87 JP 207393/87

(43) Date of publication of application:
23.08.89 Bulletin 89/34

(84) Designated Contracting States:
DE FR GB

(71) Applicant: FANUC LTD
3580, Shibokusa Aza-Komanba Oshino-mura
Minamitsuru-gun Yamanashi 401-05(JP)

(72) Inventor: WATANABE, Atsushi Room 7-207
Fanuc Manshonharimomi
3539-1, Shibokusa, Oshino-mura
Minamitsuru-gun Yamanashi 401-05(JP)

(74) Representative: Billington, Lawrence Emlyn et al
HASELTINE LAKE & CO Hazlitt House 28
Southampton Buildings Chancery Lane
London WC2A 1AT(GB)

(54) CALIBRATION SYSTEM FOR VISUAL SENSOR SYSTEM.

(57) This invention provides a calibration system for a visual sensor system which can integrate accurately and easily a plurality of camera coordinate systems of a visual sensor system into one coordinate system. In carrying out calibration, a frame member (5) of a calibration mechanism (4) is sequentially moved in X-, Y- and Z-axis directions a predetermined distance according to a 3-axis table. An image processor performs required operation for each axis on the basis of image positions of holes (P1, P2, P3) of the frame member (5) before and after the movement produced by cameras (C1, C2, C3), integrates a plurality of camera coordinate sytems into one system and completetes calibration.

FIG.1

## CALIBRATION METHOD FOR A VISUAL SENSOR SYSTEM

### Technical Field

The present invention relates to a visual sensor system and, more particularly, to a calibration method for a visual sensor system which synthesizes images obtained from a plurality of cameras and, based on the synthesized image, recognizes the position and attitude of an object to be detected.

### Background Art

In the case of automating the spot welding process, sealing process, etc. in the manufacture of vehicle bodies by using robots, for example, it is necessary to recognize the position and attitude or pose of each vehicle body as an object to be detected which is large-sized. To this end, an object recognition method has been conventionally employed in which the position and pose of an entire object to be detected are calculated on the basis of the positions at which the image or picture of several portions of the object are respectively displayed on a plurality of associated camera screens.

In this type of object recognition method, unification of the coordinate systems of a plurality of camera screens into one coordinate system is indispensable.

To unify the coordinate systems of a plurality of cameras into one system, a conventional method is known wherein a plurality of cameras are attached to camera mounts respectively set in predetermined positions, to thereby set the position and orientation of the cameras with exactness.

The conventional method is, however, disadvantageous in that high precision is required for both the manufacture of the camera mounts and the mounting of the cameras to the camera mounts, thus incurring extreme difficulties. Furthermore, the camera mounts must be replaced, or the locations of the camera mounts or the mounting positions of the cameras to the mounts must be changed, depending upon the kind, size, shape, etc. of the object to be detected with the visual sensor. With the conventional method, therefore, it is difficult to unify with high precision the coordinate systems of a plurality of cameras into one coordinate system.

### Disclosure of the Invention

An object of the invention is to provide a calibration method for a visual sensor system which is capable of unifying the coordinate systems of a plurality of cameras into one coordinate system with high precision and with ease.

In order to achieve the above-mentioned object, the calibration method for a visual sensor system according to the invention comprises steps of: (a) arranging a plurality of cameras, which respectively correspond to a plurality of specific portions of an object to be detected, such that each of the specific portions of the object is within a visual field of an associated one of the cameras; (b) teaching a position of the image of each specific portion of the object within a screen of the associated camera, as a first reference coordinate point in a coordinate system of the same camera; (c) moving the object over a respective predetermined distance along each of axes of a coordinate system of a space in which the object is located; (d) teaching a position of the image of each specific portion of the object within the associated camera screen as a second reference coordinate point relating to a corresponding axis of the coordinate system of the same camera each time movement of the object along each axis of the coordinate system of the space in the step (c) is completed; and (e) correlating the coordinate system of each of the cameras with the coordinate system of the space in which the object is located, on the basis of the first reference coordinate point and a set of second reference coordinate points taught in the steps (b) and (d), respectively, and the respective predetermined distance, thereby unifying the coordinate systems of the cameras into one coordinate system.

As mentioned above, according to the invention, the coordinate systems of a plurality of cameras are unified into one coordinate system on the basis of those positions of the image of each specific portion of the object within the camera screen which are taken before and after the object is moved along each of the axes of the coordinate system of the space in which the object is located. Therefore, unification of a plurality of coordinate systems, i.e., calibration of a visual sensor system including a plurality of cameras, can be performed with high precision and with ease, thus enabling construction of a composite visual sensor system provided with plural cameras, which is generally considered to be difficult to achieve.

## Brief Description of the Drawings

Fig. 1 is a perspective view schematically showing a calibration mechanism and cameras, to which the calibration method according to one embodiment of the invention is applied;

Fig. 2 is a perspective view schematically showing a visual sensor system;

Fig. 3 is a diagram illustrating images displayed on respective cameras in Fig. 2 when a first reference coordinate point is taught in the coordinate system of each camera;

Fig. 4 is a diagram illustrating images displayed on the respective cameras when the mechanism of Fig. 1 is moved in the x-axis direction; and

Fig. 5 is a diagram illustrating the coordinate systems formed in respective camera screens as a result of movements of the mechanism in the x-, y- and z-axes directions.

## Best Mode of Carrying Out the Invention

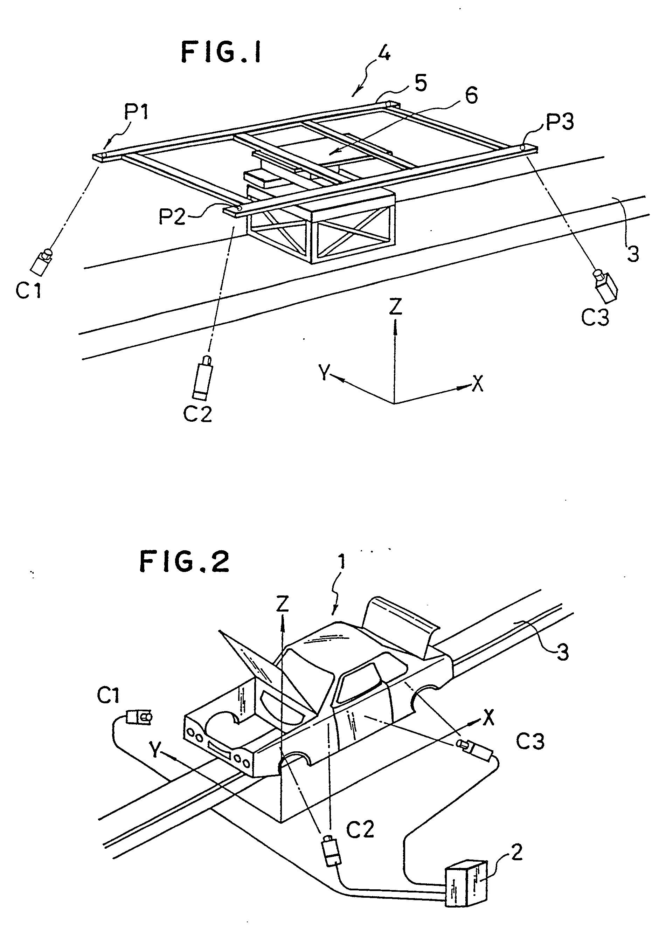

First referring to Fig. 2, a vehicle body 1 is moved to a predetermined position, as illustrated, by conveyor means 3, and is subjected to, for example, welding there by means of a welding robot, not shown. Near the predetermined position is arranged a visual sensor system for detecting the position and pose of the vehicle body 1 (object to be detected), as necessary data for the welding process. The visual sensor system comprises three cameras C1, C2 and C3, and an image processing apparatus 2 connected to the cameras. The imaging processing apparatus 2 is of a conventional type including a host processor, an image processor, manual data input means with a CRT display (hereinafter referred to as "the CRT/MDI"), an image frame memory, a data memory, etc. (neither of them are shown). The cameras C1, C2 and C3 are disposed in a facing relation to three specific portions (not shown) of the vehicle body 1, respectively.

A calibration mechanism 4, shown in Fig. 1, comprises a frame 5, and a triaxial table 6 having a movable portion for supporting the frame 5. The frame 5 is utilized tentatively as an object to be detected (that is, as a substitute for the vehicle body 1) when calibration described hereinafter is performed. More specifically, three holes P1, P2 and P3 tentatively serving as the specific portions of the vehicle body 1 are formed in the frame 5. The positional relationship among the three holes P1-P3 is identical to that established among the three specific portions of the vehicle body 1. The triaxial table 6 is arranged to allow the frame 5, mounted on the movable portion of the table 6, to move along the x-, y- and z-axes of a three-dimensional orthogonal coordinate system of a space in which the calibration mechanism 4 serving as a substitute for the vehicle body 1, and the visual sensor system are located (hereinafter referred to as "the sensor coordinate system").

Now, a calibration method for a visual sensor system, according to an embodiment of the invention, will be described.

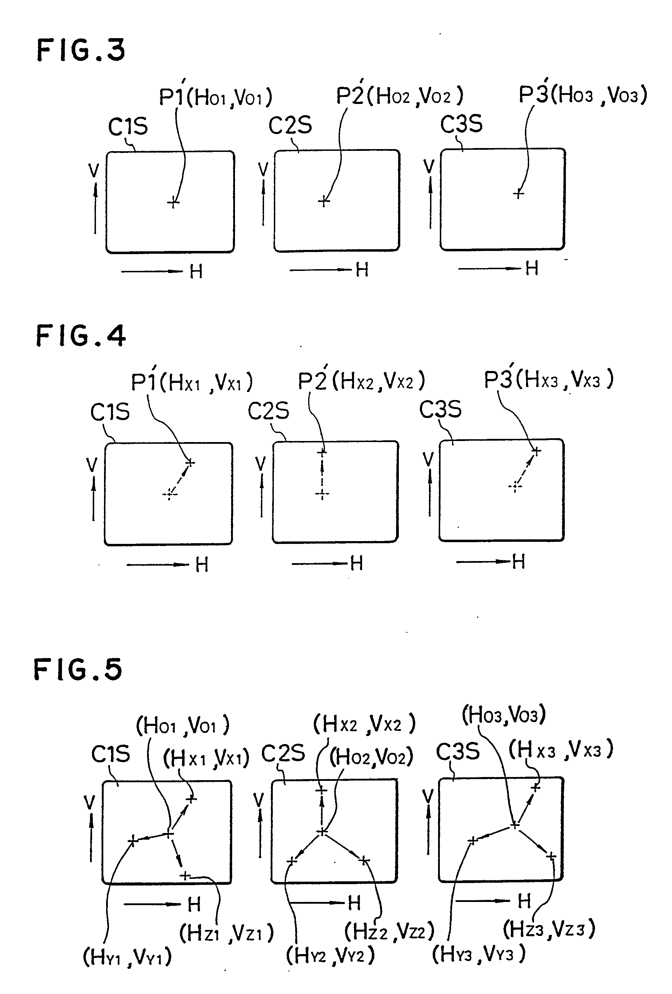

First, the calibration mechanism 4 is placed at the predetermined position of the conveyor means 3. Then, the cameras C1-C3 are arranged at such positions that the holes P1-P3 formed in the frame 5 of the calibration mechanism 4 are respectively within the visual fields of the cameras C1-C3. The images from the cameras C1, C2 and C3 are sequentially displayed on the screen of the CRT display of the image processing apparatus 2, and the directions of the cameras C1, C2 and C3 are sequentially adjusted so that the centers P1', P2' and P3' of the images of the holes P1, P2 and P3 almost coincide with the centers of camera screens C1S, C2S and C3S, as shown in Fig. 3. After the adjustment is completed, an operator teaches, to the image processing apparatus 2, the position at which the center $Pi'$ (i = 1, 2, 3) of each of the images of the holes Pi is located in the screen of the associated camera, as a first reference coordinate point $(Hoi, Voi)$ for the x-, y- and z-axes of the coordinate system of the same camera, by means of the CRT/MDI. The symbols H and V represent the horizontal and vertical axes of the camera, respectively, o denotes the parameter indicative of the first reference coordinate point, and i denotes the number of the camera. The first reference coordinate points $(Hoi, Voi)$ taught in the aforesaid manner are stored in the memory of the image processing apparatus 2.

As a result of the teaching of the first reference coordinate points, the positions of the centers P1'-P3' of the holes P1-P3 in the sensor coordinate system, which are known from the outset, can be correlated with the positions (first reference coordinate points) of the centers P1'-P3' of the holes in the coordinate systems of the respective cameras.

Next, the triaxial table 6 of the calibration mechanism 4 is driven to cause its movable portion, as well as the frame 5 supported thereby, to move in the x-axis direction of the sensor coordinate system from the initial position (origin point) over a predetermined distance L. When the movement of the frame 5 is completed, the operator teaches, to the image processing apparatus 2, the position of the center $Pi'$ (Fig. 4) of each of the images of the holes Pi within the respective camera screen, as a second reference coordinate point (Hxi, Vxi) relating to the x-axis of the respective camera coordinate system. The second reference coordinate points are stored in the memory of the image processing apparatus 2.

After the movable portion of the triaxial table 6 and the frame 5 are returned to the origin point, they are moved in the y-axis direction of the sensor coordinate system by the predetermined distance L. Upon completion of the movement, the operator teaches the position of the center $Pi'$ of each of the images of the holes within the respective camera screen as a second reference coordinate point (Hyi, Vyi) relating to the y-axis of the respective camera coordinate system. These second reference coordinate points also are stored in the memory.

The movable portion of the table 6 is again returned to the origin point, and is moved in the z-axis direction of the sensor coordinate system over the predetermined distance L. The operator teaches the position of the center $Pi'$ of each of the images of the holes within the respective camera screen as a second reference coordinate point (Hzi, Vzi) relating to the z-axis of the respective camera coordinate system. These second reference coordinate points are stored in the memory. Also, data of the predetermined distance L is input through the CRT MDI to be stored in the memory.

In consequence of the above-described teachings, various reference coordinate points within the camera screens Cis (i = 1, 2, 3) are set and stored. The directions of the x-, y- and z-axes of each of the camera coordinate systems are determined from the first reference coordinate point (Hoi, Voi) and a set of the second reference coordinate points (Hxi, Vxi), (Hyi, Vyi) and (Hzi, Vzi) respectively relating to the x-, y-and z-axes of the individual coordinate system. Further, the relationship of distance along the x-, y-and z-axes between the camera coordinate systems and the sensor coordinate system (i.e., the scale of distance along each of the axes of the camera coordinate systems) is determined from the distance between the respective first reference coordinate point and each of the associated second reference coordinate points relating to the x-, y- and z-axes, and the predetermined distance L. The relationship between the positions of the first reference coordinate points in the respective camera coordinate systems and the corresponding positions in the sensor coordinate system is determined, as stated above. Hence, the camera coordinate systems are correlated with the sensor coordinate system by the calibration process described above. In other words, a plurality of camera coordinate systems are unified into one coordinate system.

After the calibration of the visual sensor system is completed, the calibration mechanism 4 is removed, and welding of the vehicle body 1, for example, is started. During the welding process, the aforementioned three specific portions of the vehicle body 1 are detected by the cameras C1-C3. Based on the data representing the positions of the three specific portions of the vehicle body 1 in the camera coordinate systems, the image processing apparatus 2 calculates the position of the vehicle body 1 in the sensor coordinate system as well as the rotational angles of the same relative to the respective axes of the sensor coordinate system, and outputs the results of the calculation to the welding robot, not shown.

Although in the above embodiment the invention is applied to calibration of the three-dimensional coordinate system, it can be applied to calibration of the two-dimensional coordinate systems.

Furthermore, the positional relationship among the holes P1-P3 formed in the frame 5 of the calibration mechanism 4 is kept fixed in the embodiment. It may of course be varied depending upon the object to be detected.

## Claims

1. A calibration method for a visual sensor system, comprising steps of:

(a) arranging a plurality of cameras, which respectively correspond to a plurality of specific portions of an object to be detected, such that each of the specific portions of the object is within a visual field of an associated one of the cameras;

(b) teaching a position of the image of each specific portion of the object within a screen of the associated camera, as a first reference coordinate point in a coordinate system of the same camera;

(c) moving the object over a respective predetermined distance along each of axes of a coordinate system of a space in which the object is located;

(d) teaching a position of the image of each specific portion of the object within the associated camera screen as a second reference coordinate point relating to a corresponding axis of the coordinate system of the same camera each time movement of the object along each axis of the coordinate system of the space in the step (c) is completed; and

(e) correlating the coordinate system of each of the cameras with the coordinate system of the space in which the object is located, on the basis of the first reference coordinate point and a set of second reference coordinate points taught in the steps (b) and (d), respectively and the respective predetermined distance, thereby unifying the coordinate systems of the cameras into one coordinate system.

2. The method according to claim 1, wherein said plurality of specific portions of the object have a positional relationship identical to that established among a plurality of specific portions of an object to be actually detected during operation of the visual sensor system.

3. The method according to claim 1 or 2, wherein, in the step (a), locations and directions of the cameras are adjusted such that the image of the specific portion of the object is located at a central portion of the respective camera screen.

4. The method according to claim 3, wherein, in the step (a), a position of a center of the image of the specific portion of the object is taught as the first reference coordinate point.

5. The method according to claim 1 or 2, wherein the coordinate system of the space in which the object to be detected is located comprises a three-dimensional orthogonal coordinate system.

6. The method according to claim 1 or 2, wherein, in the step (e), a scale of distance along the respective axis of the coordinate system of each camera, and a relationship between the directions of the axes of the coordinate system of each camera and those of the axes of the coordinate system of the space in which the object is located are determined on the basis of the first reference coordinate point, a set of the second reference coordinate points, and the respective predetermined distance.

7. The method according to claim 1 or 2, wherein, in the step (e), a relationship between the first reference coordinate point in each of the coordinate systems of the cameras, taught in the step (b), and the coordinate position of the same first reference coordinate point in the coordinate system of the space in which the object is located is determined.

# FIG.1

# FIG.2

# FIG.3

$P1'(H_{01}, V_{01})$    $P2'(H_{02}, V_{02})$    $P3'(H_{03}, V_{03})$

C1S    C2S    C3S

V    V    V

→ H    → H    → H

# FIG.4

$P1'(H_{X1}, V_{X1})$    $P2'(H_{X2}, V_{X2})$    $P3'(H_{X3}, V_{X3})$

C1S    C2S    C3S

V    V    V

→ H    → H    → H

# FIG.5

$(H_{01}, V_{01})$    $(H_{X2}, V_{X2})$    $(H_{03}, V_{03})$

C1S    $(H_{X1}, V_{X1})$    C2S    $(H_{02}, V_{02})$    C3S    $(H_{X3}, V_{X3})$

V    V    V

→ H    → H    → H

$(H_{Z1}, V_{Z1})$    $(H_{Z2}, V_{Z2})$    $(H_{Z3}, V_{Z3})$

$(H_{Y1}, V_{Y1})$    $(H_{Y2}, V_{Y2})$    $(H_{Y3}, V_{Y3})$

# INTERNATIONAL SEARCH REPORT

International Application No  PCT/JP88/00834

**I. CLASSIFICATION OF SUBJECT MATTER** (if several classification symbols apply, indicate all) [6]

According to International Patent Classification (IPC) or to both National Classification and IPC

Int.Cl[4]  B25J19/04, G05B19/18

**II. FIELDS SEARCHED**

| Minimum Documentation Searched [7] | |
|---|---|
| Classification System I | Classification Symbols |
| IPC | B25J9/10-9/22, 19/04, G05B19/18 |

| Documentation Searched other than Minimum Documentation to the Extent that such Documents are Included in the Fields Searched [8] | |
|---|---|
| Jitsuyo Shinan Koho | 1926 – 1988 |
| Kokai Jitsuyo Shinan Koho | 1971 – 1988 |

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | JP, A, 60-151711 (Hitachi, Ltd.) 9 August 1985 (09. 08. 85) & EP, A1, 151417 | 1-7 |
| A | JP, A, 60-252914 (Fanuc Ltd.) 13 December 1985 (13. 12. 85) Page 2, lower left column, line 6 to page 2, lower right column, line 2 (Family: none) | 1-7 |
| A | JP, A, 61-131887 (Fujitsu Ltd.) 19 June 1986 (19. 06. 86) Page 2, upper left column, line 17 to page 2, upper right column, line 14 (Family: none) | 1-7 |
| A | JP, A, 62-57892 (Matsushita Electric Ind. Co., Ltd.) 13 March 1987 (13. 03. 87) Page 1, lower left column, lines 5 to 20 (Family: none) | 1-7 |

* Special categories of cited documents: [10]
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

**IV. CERTIFICATION**

| Date of the Actual Completion of the International Search | Date of Mailing of this International Search Report |
|---|---|
| October 25, 1988 (25. 10. 88) | November 7, 1988 (07. 11. 88) |
| International Searching Authority | Signature of Authorized Officer |
| Japanese Patent Office | |

Form PCT/ISA/210 (second sheet) (January 1985)

| | | |
|---|---|---|
| **FURTHER INFORMATION CONTINUED FROM THE SECOND SHEET** | | |
| P | JP, A, 62-214403 (Yaskawa Electric Mfg. Co., Ltd.) 21 September 1987 (21. 09. 87) Page 3, upper left column, line 5 to upper right column, line 8 (Family: none) | 1-7 |

**V.☐ OBSERVATIONS WHERE CERTAIN CLAIMS WERE FOUND UNSEARCHABLE** [10]

This international search report has not been established in respect of certain claims under Article 17(2) (a) for the following reasons:

1.☐ Claim numbers_____ because they relate to subject matter [12] not required to be searched by this Authority, namely:

2.☐ Claim numbers_____ because they relate to parts of the international application that do not comply with the prescribed requirements to such an extent that no meaningful international search can be carried out [13], specifically:

**VI.☐ OBSERVATIONS WHERE UNITY OF INVENTION IS LACKING** [11]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (October 1981)